# EUROPÄISCHE PATENTSCHRIFT

(11) **EP 0 736 675 B1**
(45) Veröffentlichungstag und Bekanntmachung des Hinweises auf die Patenterteilung: **14.06.2000**
(21) Anmeldenummer: 96105472.3
(22) Anmeldetag: 04.04.1996
(51) Int. Cl.: F01N 3/20, F01N 9/00

(54) **Anordnung zur Steuerung der Heizung von beheizbaren Katalysatoren**
Device to control the heating of a heatable catalytic converter
Dispositif de commande de chauffage d'un catalyseur chauffable

(30) Priorität: 05.04.1995 DE 19512298
(43) Veröffentlichungstag der Anmeldung: 09.10.1996
(73) Patentinhaber: Heraeus Electro-Nite International N.V., 3530 Houthalen (BE)
(72) Erfinder: Häfele, Edelbert, Dr., D-76228 Karlsruhe (DE)
(74) Vertreter: Kühn, Hans-Christian

(56) Entgegenhaltungen:
- EP-A- 0 498 598
- DE-A- 4 323 243
- US-A- 5 216 880
- PATENT ABSTRACTS OF JAPAN vol. 017, no. 686 (M-1529), 15.Dezember 1993 & JP 05 231135 A (TOYOTA MOTOR CORP), 7.September 1993,

## Beschreibung

Die Erfindung betrifft eine Anordnung gemäß dem Oberbegriff des Anspruchs 1.

Es sind Anordnungen zur Überprüfung der Funktionsfähigkeit von Katalysatoren mit zwei Lamdasonden für das Abgas von Verbrennungsmotoren in einer Vielzahl von Ausführungsformen bekannt (z.B. DE-23 04 464 C2). Diese bekannten Anordnungen bergen die Nachteile in sich, daß sie nicht hinreichend zuverlässig die Funktionsfähigkeit überwachen können, weil eine indirekte Messung entweder mit zwei Lambda-Sonden (DE 40 39 429) oder mittels Temperatursonden erfolgt.

Es ist ferner eine gattungsgemäße Anordnung gemäß dem Oberbegriff des Hauptanspruchs bekannt (DE 43 23 243 A1), mit der von zwei Lambasonden das Konvertierungsvermögen des Katalysators bestimmt wird. Falls dieses ausreicht, wird nicht geheizt bzw. das Heizen eingestellt; ist es nicht ausreichend, so wird der Katalysator aufgeheizt, bis wieder ein ausreichendes Konvertierungsvermögen vorhanden ist. Führt das Heizen nicht zum Erfolg, so wird eine Diagnose zur Feststellung der Funktionsfähigkeit des Katalysators durchgeführt. Nachdem eine zuverlässige Feststellung der Funktionsfähigkeit bei gealterten Katalysatoren aufgrund der nicht mehr mit der Sauerstoffspeicherkapazität korrelierenden Umsatzrate an Kohlenwasserstoffen und anderen Schadstoffen nicht möglich ist, kann eine hinreichend genaue Diagnose auch nicht erfolgen.

Aus JP 05-231135 ist eine Abgasreinigung für einen Magermotor bekannt, bei dem ein Stickoxidkatalysator im Abgasweg angeordnet ist. Mit Hilfe eines Temperatursensors wird die Heizleistung eines Heizgerätes derart geregelt, daß die Temperatur des Katalysators in einem solchen Temperaturfenster gehalten wird, in dem die Reinigungsaktivität des Katalysators hoch ist.

Der Erfindung liegt deshalb die Aufgabe zugrunde, eine gattungsgemäße Anordnung gemäß dem Oberbegriff des Anspruchs 1 zuverlässiger sowie schnell reagierend auszubilden.

Diese Aufgabe wird bei einer gattungsgemäßen Anordnung gemäß dem Oberbegriff des Anspruchs 1 erfindungsgemäß durch dessen kennzeichnende Merkmale gelöst.

So werden also keine zwei Lambdasonden, sondern ein Schadstoffsensor in Strömungsrichtung des Abgases hinter oder in dem Katalysator angeordnet, wobei in Abhängigkeit von dem Ausgang der Auswerteschaltung (15) der beheizbare Katalysator aufgeheizt wird. Es ist mit Vorteil auch möglich, den Schadstoffsensor zwischen zwei oder mehreren einzelnen Katalysatoren anzuordnen, weil dann die definierte Änderung höhere Werte der Emissionsspitzen erreicht, diese vergleichsweise höheren Konzentrationen jedoch in dem nachfolgenden Katalysator abgebaut werden können, so daß die Feststellung der Funktionsfähigkeit zu keinem höheren Schadstoffausstoß führt.

In vorteilhafter Ausgestaltung der Erfindung weist der Katalysator in Strömungsrichtung des Abgases einen beheizbaren Teilkatalysator auf, hinter dem der einzige Schadstoffsensor angeordnet ist, so daß in Abhängigkeit von dessen Ausgangssignal über die Auswerteschaltung der beheizbare Teilkatalysator betätigt werden kann. Dieser kann zweckmäßigerweise elektrisch beheizbar ausgebildet sein. In alternativer Ausführungsform ist es aber auch möglich, in Strömungsrichtung des Abgases nach dem Katalysator eine Umleiteinrichtung für das Abgas in eine Schadstoff alle vorzusehen, deren Ausgang mit dem Rohr mit dem Abgas verbunden ist, so daß während dieser Zeit, in welcher der Schadstoffsensor noch Schadstoffe nachweist, diese in der Schadstoffalle zurückgehalten werden. Erst wenn der Katalysator wieder unter seinen Betriebsbedingungen zufriedenstellend arbeitet, wird die Strömung mittels der Umleiteinrichtung durch die Schadstoffalle reversiert, so daß das zuvor abgefangene Abgas dann in Strömungsrichtung vor dem Katalysator wieder zugeführt wird.

Wird also der beheizbare Teilkatalysator in Abhängigkeit von dem Ausgangssignal des Schadstoffsensors gesteuert, können Schadstoffemissionen in Kaltstartphasen minimiert werden. Außerdem kann eine Optimierung der Heizzeit erzielt werden, so daß bei Verwendung des Katalysators bei Kraftfahrzeugen deren Bordnetz nur soweit unbedingt notwendig, belastet wird. Mit dieser Vorrichtung ist ferner eine Kompensation von Alterungsphänomenen möglich, so daß hierdurch bedingt stets ein optimales Reinigungsverhalten des Katalysators erzielt werden kann. Nachdem der Schadstoffsensor einerseits unmittelbar hinter dem beheizbaren Teilkatalysator angeordnet ist, andererseits schnell anspricht, ist eine kurze Ansteuerzeit möglich. Sollte der elektrisch beheizbare Teilkatalysator während des Betriebs auskühlen und unter seine optimale Betriebstemperatur sinken, kann dies schnellstmöglich durch Nachheizen beseitigt werden. Hierzu ist es außerdem zweckmäßig, wenn ein weiterer Teilkatalysator in Strömungsrichtung des Abgases hinter dem Schadstoffsensor vorgesehen wird, der dann die von dem Schadstoffsensor gemessenen Schadstoffspitzen noch puffern bzw. egalisieren kann. Mit der Erfindung ist es also möglich, nicht nur den gegenwärtigen Betriebszustand des Katalysators nachzuregeln, sondern es werden auch künftige Alterungszustände des Katalysators durch die Erfindung berücksichtigt.

Zweckmäßige Ausgestaltungen und Weiterbildungen der Erfindung sind in den Unteransprüchen gekennzeichnet.

Ein bevorzugtes Ausführungsbeispiel wird nachfolgend unter Bezugnahme auf die Zeichnung näher erläutert. In dieser zeigt:
- Figur 1: eine schematische Darstellung einer Anordnung;
- Figur 2: ein Ausführungsbeispiel für die Erfindung
- Figur 3: ein weiteres Ausführungsbeispiel für die Erfindung

Zunächst sei mit dem Richtungspfeil 10 das strömende Abgas aus einem Verbrennungsmotor eines Kraftfahrzeuges bezeichnet, das durch einen insgesamt mit 11 bezeichneten Katalysator abfließt. Mit 12 ist ein in Strömungsrichtung 10 des Abgases hinter dem Katalysator 11 angeordneter Schadstoffsensor bezeichnet, der auf Kohlenwasserstoffe HC anspricht. Vor dem Katalysator 11 und dem Schadstoffsensor 12 ist eine Leitung 13 vorgesehen, über die Luft oder reiner Sauerstoff in definiertem Maße gesteuert, beispielsweise über eine Sekundärluftpumpe von der insgesamt mit 14 bezeichneten Vorrichtung zuführbar ist.

Der Ausgang des Schadstoffsensor 12 ist elektrisch mit einer Auswerteschaltung 15 verbunden. Dessen Ausgang sowie der Ausgang eines Speichers 16 sind mit den Eingängen einer insgesamt mit 17 bezeichneten Schaltung verbunden, deren Ausgangssignal Auskunft über die Funktionsfähigkeit des Katalysators 11 oder der (nicht gezeigten) Lambda-Sonden Auskunft gibt. Eine insgesamt mit 18 bezeichnete Ablaufsteuerung ist sowohl mit der Einrichtung 14, als auch mit der Auswerteschaltung 15 sowie dem Speicher 16 verbunden.

Durch die Ablaufsteuerung wird zum einen bewirkt, daß eine vorzugsweise schnelle definierte Änderung im Abgas, nämlich eine definierte Zuführung von Sekundärluft bewirkt wird, was einer Abmagerung des Kraftstoff-Luftgemisches entspricht. Zugleich wird die Auswerteschaltung 15 für den Schadstoffsensor 12 sowie der Speicher 16 aktiviert, um das aufbereitete Ausgangssignal des Schadstoffsensors 12 am Ausgang der Auswerteschaltung 15 mit einem zuvor gespeicherten, der definierten Änderung des Lambda-Wertes im Abgas entsprechenden Werteprofil in der Vergleichsschaltung 17 zu vergleichen. Stimmen die Werte überein, oder liegen sie innerhalb eines vorgebbaren Toleranzbereiches, so kann auf die Funktionsfähigkeit des Katalysators sowie der Lambda-Sonden geschlossen werden. Liegen sie außerhalb, muß von einem Fehler ausgegangen werden.

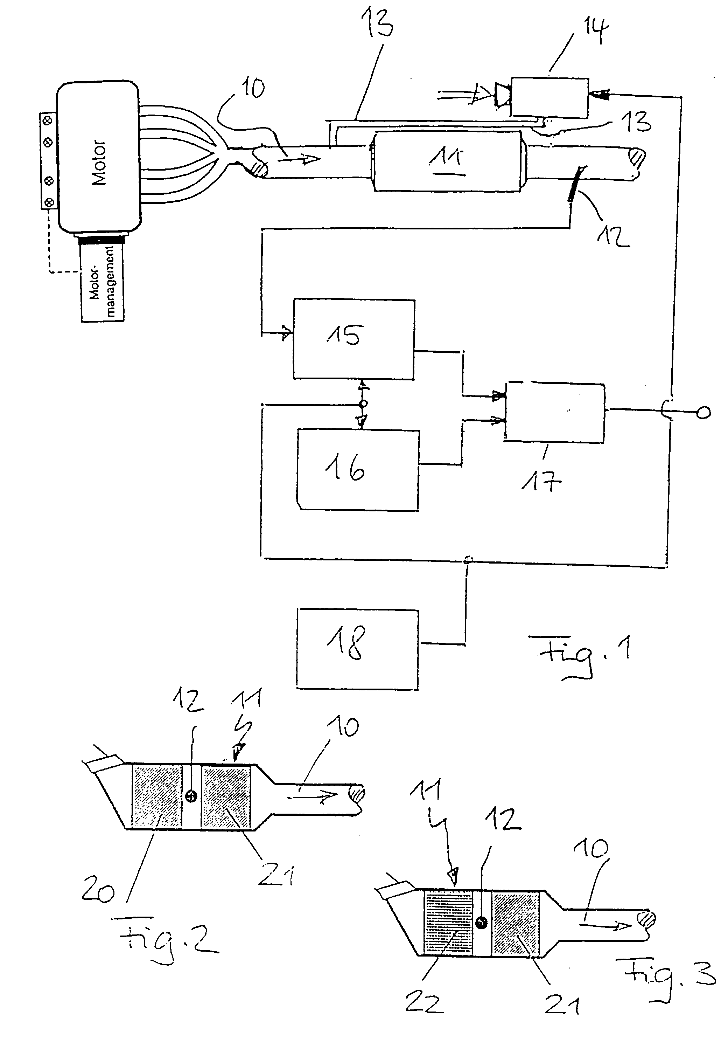

Die vorstehend unter Bezugnahme auf Figur 1 bezeichnete Anordnung kann Katalysatoren 11, wie sie in den Figuren 2 oder 3 dargestellt sind, aufweisen. Bei der einen Ausführungsform gemäß Figur 2 des Katalysators 11 sind zwei Teilkatalysatoren 20, 21 beim wiedergegebenen Ausführungsbeispiel in Form von Monolithen vorgesehen. Selbstverständlich können statt dessen auch Metalite vorgesehen sein.

In alternativer Ausführungsform kann der Katalysator 11 einen beheizbaren Teilkatalysator 22 aufweisen, der in Strömungsrichtung 10 des Abgases vor dem Schadstoffsensor 12 angeordnet ist, hinter dem dann noch ein breiterer - unbeheizter - Teilkatalysator 21 nachgeordnet sein kann. In Abhängigkeit von dem Ausgangssignal des Schadstoffsensors 12 kann über die Auswerteschaltung 15 je nach Bedarf die Heizung des katalysators (22) eingeschaltet werden.

## Patentansprüche

1. Anordnung zur Steuerung der Heizung eines beheizbaren Katalysators in Entgiftungsanlagen für Abgas, insbesondere beim Abgas von Verbrennungsmotoren von Kraftfahrzeugen, mit einer Auswerteschaltung (15) und mit einem abgasführenden, beheizbaren Katalysator (11) der zwei Teilkatalysatoren aufweist (20,21), wobei in Strömungsrichtung (10) des Abgases hinter oder in dem Katalysator (11) ein einziger Sensor (12) angeordnet ist, dessen elektrisches Ausgangssignal über die Auswerteschaltung (15) ausgewertet wird und über den Ausgang der Auswerteschaltung (15) der beheizbare Katalysator (11) aufgeheizt wird, **dadurch gekennzeichnet**, daß der einzige Sensor als HC-Schadstoffsensor (12) ausgebildet ist und daß der Schadstoffsensor (12) zwischen den zwei Teilkatalysatoren (20,21) angeordnet ist.

2. Anordnung nach Anspruche 1, dadurch gekennzeichnet, daß der Katalysator (11) in Strömungsrichtung (10) des Abgases einen beheizbaren Teilkatalysator (22) aufweist und daß hinter diesem der Schadstoffsensor (12) angeordnet ist.

3. Anordnung nach Anspruch 2, dadurch gekennzeichnet, daß der beheizbare Teilkatalysator (22) als elektrisch und/oder mit einer Flamme beheizbar ausgebildet ist.

4. Anordnung nach Anspruch 2, dadurch gekennzeichnet, daß in Strömungsrichtung (10) des Abgases nach dem Katalysator (11) eine Umleiteinrichtung für das Abgas in eine Schadstoffalle vorgesehen ist, deren Ausgang mit dem Rohr mit dem Abgas verbunden ist.

5. Anordnung nach Anspruch 4, dadurch gekennzeichnet, daß in Abhängigkeit von dem elektrischen Ausgangssignal des Schadstoffsensors (12) der beheizbare Teilkatalysator (22) oder die Umleiteinrichtung betätigbar ist.

## Claims

1. Heating control arrangement for a heatable catalytic converter for decontamination systems for exhaust gas, particularly for the exhaust gas of motor vehicle internal combustion engines, with an evaluation circuit (15) and with a heatable catalytic converter (11) which carries the exhaust gas and has two converter elements (20, 21), wherein either downstream of the converter (11) in the direction of flow (10) of the exhaust gas or within the converter (11) is arranged a single sensor (12) an electrical output signal of which is evaluated by the evaluation circuit (15), and the heatable catalytic converter (11) is heated up in response to the output of the evaluation circuit (15), characterized in that the single sensor is a hydrocarbon pollutant sensor (12) and in that the pollutant sensor (12) is arranged between the two converter elements (20, 21).

2. Arrangement according to Claim 1, characterized in that the catalytic converter (11) has a single heatable converter element (22) and in that the pollutant sensor (12) is located downstream thereof in the direction of flow (10) of the exhaust gas.

3. Arrangement according to Claim 2, characterized in that the heatable converter element (22) is an electrically heatable and/or flame-heatable element.

4. Arrangement according to Claim 2, characterized in that a device is provided downstream of the catalytic converter (11) in the direction of flow (10) of the exhaust gas, for diverting exhaust gas into a pollutant trap the outlet of which is connected to the pipe conveying the exhaust gas.

5. Arrangement according to Claim 4, characterized in that the heatable converter element (22) or the diverter device is activated in response to the electrical output signal of the pollutant sensor (12).

## Revendications

1. Dispositif de commande du chauffage d'un catalyseur pouvant être chauffé dans des installations de dépollution de gaz d'échappement, en particulier dans le cas de gaz d'échappement de moteurs à combustion interne de véhicules, équipé d'un circuit d'évaluation (15) et d'un catalyseur pouvant être chauffé (11) conduisant les gaz d'échappement qui comporte deux catalyseurs partiels (20, 21) dans la direction d'écoulement (10) des gaz d'échappement, un unique capteur (12) étant disposé dans la direction d'écoulement (10) des gaz d'échappement en aval ou dans le catalyseur (11), dont le signal de sortie électrique est évalué par l'intermédiaire du circuit d'évaluation (15), et par l'intermédiaire du signal de sortie du circuit d'évaluation (15) est chauffé le catalyseur pouvant être chauffé (11), caractérisé en ce que l'unique capteur est réalisé sous la forme d'un capteur d'hydrocarbures (12) et en ce que le capteur de polluants (12) est disposé entre les deux catalyseurs partiels (20, 21).

2. Dispositif selon la revendication 1, caractérisé en ce que le catalyseur (11) dans la direction d'écoulement (10) des gaz d'échappement comporte un catalyseur partiel (22) pouvant être chauffé et en ce qu'en aval de celui-ci est disposé le capteur de polluants (12).

3. Dispositif selon la revendication 2, caractérisé en ce que le catalyseur partiel (22) pouvant être chauffé est réalisé de manière à pouvoir être chauffé électriquement et/ou à l'aide d'une flamme.

4. Dispositif selon la revendication 2, caractérisé en ce que dans la direction d'écoulement (10) des gaz d'échappement en aval du catalyseur (11) est prévu un dispositif de déviation pour les gaz d'échappement dans un piège à polluants, dont la sortie est reliée au tuyau d'échappement.

5. Dispositif selon la revendication 4, caractérisé en ce qu'en fonction du signal de sortie électrique du capteur de polluants (12) peut être actionné le catalyseur partiel (12) pouvant être chauffé ou le dispositif de déviation.
